# EUROPEAN PATENT APPLICATION

(11) **EP 4 776 496 A1**
(43) Date of publication of application: **15.07.2026**
(21) Application number: 25151254.7
(22) Date of filing: 10.01.2025
(51) Int. Cl.: H02M 1/32, H02M 7/5387, B60L 3/00, H02M 1/088

(54) **ADAPTIVE DIRECT POWER SEMICONDUCTOR CONTROL**

(71) Applicant: Volvo Car Corporation, 405 31 Göteborg (SE)
(72) Inventor: Zhang, Chi, SE-405 31 Göteborg (SE); Negri, Riccardo, SE-405 31 Göteborg (SE)
(74) Representative: Nederlandsch Octrooibureau

(57) **Abstract**

A method of controlling a traction inverter of an electric machine including receiving a torque estimation from a torque meter connected to the traction inverter; receiving a parameter data of a power semiconductor of the traction inverter semiconductor monitor; determining a health prediction of the power semiconductor based on the parameter data; determining an operating mode of the traction inverter based on the torque estimation, a parameter data of a power semiconductor and the health prediction of a power semiconductor; and generating a control instruction based on the operating mode, wherein the control instruction includes a first gate control of a gate of the traction inverter, a second gate control of a plurality of gates of the power semiconductor, or a current control of a current to the power semiconductor.

## Description

### Technical Field

The invention relates to a traction converter including an electrical source, and a method for controlling the traction converter. In particular, controlling the traction converter by dynamically switching a plurality of gates of a power semiconductor in a traction inverter of the traction converter.

### Background of the Present Disclosure

Modern electric and hybrid electric vehicles include complex electrical power management systems including a traction converter. A traction converter may include one or more traction inverters which convert direct current (DC) from a power source to an alternating current (AC) output. Each traction inverter may include a power module which combines multiple power semiconductors into a single package. The performance of the power module may have a direct effect on the performance of an electrical machine in electrical and hybrid vehicles.

Efficiency of electric and hybrid vehicles may depend on monitoring and control of the electrical power consumed or generated by different vehicle systems and subsystems. Dynamically controlling at least voltage and/or current peaks based on vehicle and driving features may increase the efficiency of the electric vehicle. For the sake of brevity, electric vehicle(s) will be used to mean both solely electric vehicles and hybrid electric vehicles.

A traction inverter of an electric vehicle may include a power module comprising multiple power semiconductors. The reliability of the power module has a direct effect on the performance of the electric vehicle. The design of a representative power module may be designed to manage all scenarios without considering environment variables. In other words, the design of the power semiconductor may be an over-design to manage most driving behaviors. Because a static design of the power semiconductor cannot consider every driving behavior, damage to the power semiconductor in traction inverters may occur during unconsidered driving conditions. For example, real world extreme driving behaviors such as aggressive drivers driving an electric vehicle which were not considered in the static design of the power semiconductor.

Extremely aggressive driving may frequently generate a high torque command to the electrical propulsion system of an electrical vehicle. Such a high torque command requires a relatively high current flow through power semiconductors of the traction inverter. The high current flow results in an elevated temperature inside the package for the power semiconductor. The packaging of the power semiconductor may include bonding wire, a copper-clad ceramic substrate, soldering, sintering, and other materials. The inclusion of different materials results in different coefficients of thermal expansion (CTE). The different CTEs of the different materials generate stress on the power semiconductor package. The generated stress results in damage to the power semiconductors as well as the bonding wire, copper, ceramics, and other materials of the power module. The damage may reach a level which results in failure of the power module.

As previously stated, the power module, such as a power module with a relatively large footprint, may be over-designed to achieve the high reliability desired for an efficient electric vehicle. The over-design may further include derating the power semiconductor, for example derating the lifetime consumption of the power semiconductor to 30%. These over-design choices result in higher costs of the power module and consume more space resources within the traction converter. Even with the over-design of the power module, the power module may still fail during unexpected extreme driving behaviors.

Over-designed power modules may not be able to include a mission profile for unexpected driving behaviors. Because the traction converter cannot be designed to cover every driving scenario the power semiconductors of the traction inverter may fail when an electric vehicle is performing the unexpected driving behavior. Increasing the size of the traction converter to be inclusive of extreme driving behaviors may further increase the cost and size of the traction converter and still fail to cover every driving scenario.

Because of the possibility of a traction converter of an electric vehicle failing during unexpected driving behaviors there is a desire to adaptively control the power management system of an electric vehicle based on system parameters.

The background section relating to adaptively controlling the power module is merely intended to provide a contextual overview of some current issues and is not intended to be exhaustive. Other contextual information may become apparent to a person of skill in the art upon review of the following detailed description.

### Summary of the Present Disclosure

According to an embodiment, a method of controlling a traction inverter of an electric machine comprising receiving a torque estimation from a torque meter connected to the traction inverter; receiving a parameter data of a power semiconductor of the traction inverter semiconductor monitor; determining a health prediction of the power semiconductor based on the parameter data; determining an operating mode of the traction inverter based on the torque estimation, a parameter data of a power semiconductor and the health prediction of a power semiconductor; and generating a control instruction based on the operating mode, wherein the control instruction includes a first gate control of a gate of the traction inverter, a second gate control of a plurality of gates of the power semiconductor, or a current control of a current to the power semiconductor. Controlling the traction inverter based on the received power management system parameters allows the electric machine to adapt to the present driving behaviors an electric vehicle endures.

The power management system may monitor key parameters of the power semiconductors of the traction inverter to achieve desired reliability. For example, the power management system may employ artificial intelligence (AI) algorithms to design a robust and efficient power semiconductor for a traction inverter. Such a design may avoid the over-design or over-sized power semiconductor which requires less costs and footprint as compared to existing designs. The adaptive power management system may avoid system failure or damage as a result of unpredicted driving behaviors. Employing AI algorithms may predict possible failure dates of the power semiconductors based on the power management system parameters. The system may alert an electric vehicle user to a need for maintenance based on the predicted failure date. Employing AI algorithms may eliminate the need to over-design power semiconductors.

The adaptive power management system may monitor key parameters of the power semiconductors of a traction inverter. AI algorithms may receive the key parameters to predict a health state of the power semiconductors and driving behaviors of a user of an electric vehicle. The power management system may adapt traction converter control based on the predictions of the AI algorithms such as the predicted health state and the driving behavior.

The adaptive power management system may eliminate the need to over-design the traction converter which results in reduced costs and size. Furthermore, the traction converter has an enhanced capability to adapt to an unexpected driving behaviors as compared to traction converters which do not dynamically control the traction converter based on power semiconductor parameters. As a result, the traction inverter does not require over-design or over sizing and is more reliable with lower costs.

The problem of the stress of power semiconductors in electric vehicles when the electric vehicle experiences extreme driving behaviors. The traction converter may not be designed to hand such extreme driving behaviors which may result in damage to power semiconductors of the traction converter. Over time, the power traction converter's ability to handle extreme driving conditions may diminish. This problem may occur when electrical vehicles come to the market and encounter extreme driving behaviors not considered during the design phase. Until now, over sizing or design of power semiconductor is the only approach that is being used to solve this problem.

According to an embodiment, the parameter data includes real-time data. Real-time data may change with changes in the current of the power semiconductor. Such real-time data allows for adaptively controlling the traction inverter based on rapidly changing parameters of the power semiconductors.

According to an embodiment, the parameter data includes long-term data. Long-term data may change with the age of the power semiconductor. Such long-term data allows for adaptively controlling the traction inverter based on parameters associated with the age of the power semiconductors.

According to an embodiment, the real-time data includes an on-state voltage of the power semiconductor. Controlling the traction inverter based on the on-state voltage may reduce switching losses and prevent damage of the power semiconductor due to voltage spikes.

According to an embodiment, the real-time data includes a junction temperature of the power semiconductor. Controlling the traction inverter based on the junction temperature of the power semiconductor may prevent damage to the power semiconductors due to elevated temperatures.

According to an embodiment, the long-term data includes a threshold voltage of the power semiconductor. Controlling the traction inverter based on the threshold voltage allows for a comparison of the on-state voltage with the threshold voltage to ensure the on-state voltage is maintained within a desired voltage range.

According to an embodiment, the long-term data includes an on-state resistance of the power semiconductor. Controlling the traction inverter based on the on-state resistance allows for adjusting for changes in the on-state resistance of the power semiconductor over its life.

According to an embodiment, the long-term data includes a thermal resistance of the power semiconductor. Controlling the traction inverter based on the thermal resistance allows for adjusting for changes in the thermal resistance of the power semiconductor over its life.

According to an embodiment, wherein determining the operating mode includes determining if the parameter data is the real-time data or the long-term data. Determining whether data is real-time data or long-term data increases the efficiency of processing the received data.

According to an embodiment, further including determining a rate of change of the real-time data. Determining the rate of change may allow for rapidly changing control of the traction inverter in response to rapidly changing driving behaviors.

According to an embodiment, further including determining a rate of change of the long-term data. Determining the rate of change may allow for predicting the end of life of a power semiconductor.

According to an embodiment, wherein the operating mode is further based on the rate of change of the real-time data.

According to an embodiment, wherein the operating mode is further based on the rate of change of the long-term data.

Both real-time data and long-term data have benefits for selecting an operating mode. Measuring power semiconductor parameters in real-time offers information regarding rapidly changing parameters. As a result, it is easier to analyze driver behavior using real-time data, as compared to long-term data, because real-time data can be analyzed to detect changes in the power semiconductor parameters over short periods of time. For example, rapidly increasing junction temperatures during aggressive driving.

Measuring power semiconductor parameters over a long-term period of time requires less resources as compared to measuring power semiconductor parameters in real-time. For example, an algorithm configured to determine the operating made requires less complexity to determine the operating mode, as compared to analyzing real-time data, because long-term data has a lower rate of change as compared to real-time data.

Determining the operating mode based on the rate of change of the real-time data and the long-term data allows for adaptive control of the traction inverter due to driving behavior and the age of the traction invertor.

### Brief Description of the Drawings

The present disclosure will now be described in further detail with reference to the drawings that shows one embodiment of the present disclosure:
FIG. 1 is a perspective view of a power module comprising a plurality of power semiconductors;
FIG. 2 shows a control architecture for a traction inverter;
FIG. 3 shows exemplary charts of real-time parameter measurements of the power semiconductor over time;
FIG. 4 shows exemplary charts of long-term parameter measurements of the power semiconductor over time;
FIG. 5 shows an exemplary flow chart of an exemplary method of controlling a power management system of an electric vehicle;
FIG. 6 shows an exemplary flow chart of a method for controlling a power module of a traction converter;

### Detailed Description

The present disclosure is directed to methods and devices for controlling a traction inverter of a traction converter. The method includes monitoring power semiconductors of the traction inverter and generating a control instruction based on the data received in response to monitoring the power semiconductors. The method may be configured to determine whether the received data is real-time data or long-term data. Alternatively, the method may be configured to classify the received data differently. Each classification may further contain any number of subclasses. The classifications may allow for more granular control of the traction inverter. The method may be used to adaptively control the traction inverter based on changing parameters of the power semiconductors of the traction inverter.

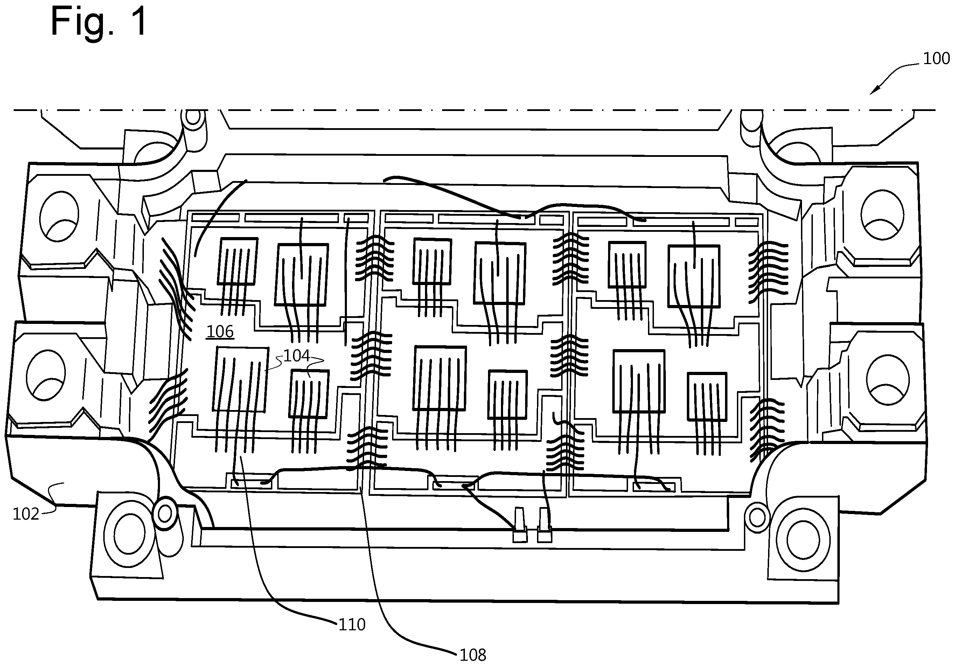

FIG. 1 illustrates a power module 100 such as a power module of a traction inverter. FIG. 1 may be any one of different conventional power modules. The proposed methods described below apply to use with any power module without requiring modification to the power module. Power module 100 may include a housing 102 and include a plurality of power semiconductors 104. The power semiconductors 104 may lie on copper plate 106. Copper plate 106 may further lie on ceramic 108. Copper plate 106 and ceramic 108 may form a copper clad substrate of the power module. Power semiconductors 104 may be electrically coupled to copper plate 106 through bonding wires 110.

Although FIG. 1 focuses on two power semiconductors 104 and their relation to copper plate 106, ceramic 108, and bonding wires 110 within power module 100, it will be clear to a person of skill in the art that other power semiconductors, copper plates, ceramics and bonding wires are illustrated. Furthermore, a person of skill in the will understand that a power module 100 may have other configurations of power semiconductors 104, copper plates 106, ceramics 108, and bonding wires 110.

Traction inverters may include power modules such as power module 100. Monitoring power modules, in particular the power semiconductors 104, during operation allows a power management system of an electric vehicle to adapt to changes in the power module. For example, if there is a change in voltage or current, the power management system may control the power module to adapt to the changing parameters. Additionally, as the power module deteriorates over its life, the power management system can predict a future failure date based on the rate of deterioration based on measured parameters of the power module.

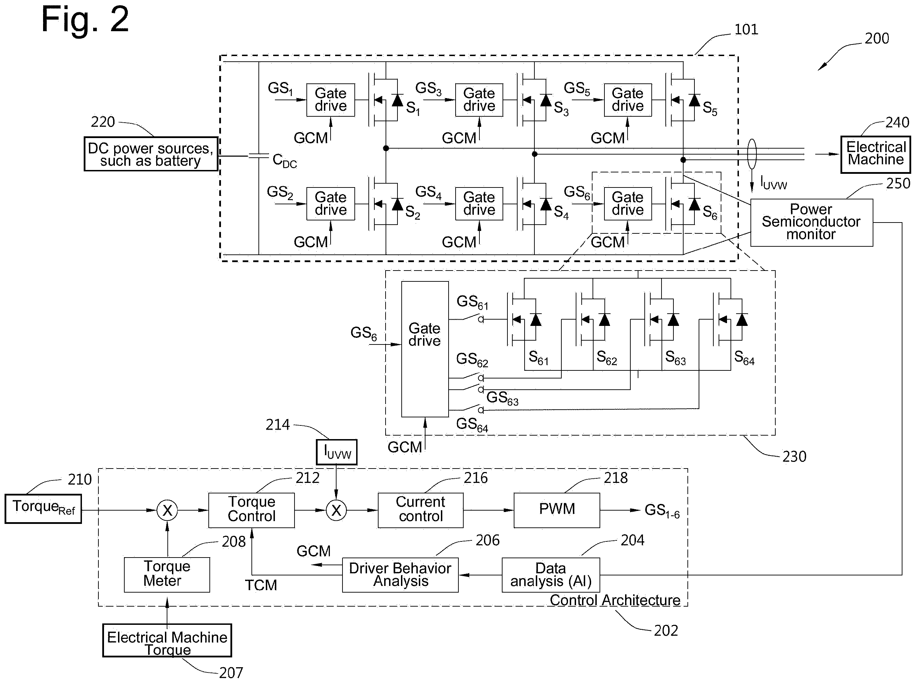

FIG. 2 illustrates power management system 200 of an electric vehicle. Power management system 200 may include control architecture 202 which is electronically coupled to power semiconductor monitor 250. Power semiconductor monitor 250 may be further electronically coupled to power module 101, similar to power module 100 of FIG. 1. In particular, power semiconductor monitor 250 may be connected to the power semiconductors of power module 101. Power semiconductor monitor 250 may be configured to measure one or more parameters of the power semiconductors.

Exemplary power module 101 may include a three phase half bridge topology. As shown, power module 101 may include six power semiconductors. Each power semiconductor of power module 101 may include a switch such as switches S₁-S₆. Furthermore, each power semiconductor may be configured to receive a gate control mode (GCM) signal and a gate switch (GS) signal GS₁ - GS₆. Each power semiconductor may be connected to a single power semiconductor monitor 250 or a single power semiconductor monitor 250 may be connected to all six power semiconductors. Power module 101 may be connected to power source 220 such as a battery. Power source 220 may provide a direct current (DC) to power module 101. Power module 101 may convert the DC provided by power source 220 to an alternating current (AC) and provide the AC to electrical machine 240. The power semiconductor may include a switch S₆ which includes four power semiconductor dies S₆₁ - S₆₄ which work in parallel. Each of the power semiconductors of the power module may share the same gate drive design as illustrated in detailed view 230. The gate drive of the power semiconductor may receive the GCM instruction, and the signal generated by a pulse modulator. Each of the four switches S₆₁ - S₆₄ in detailed view 230 may be controlled based on the received signals. Each of the power semiconductors of power module 101 may receive individual signals and be controlled independently.

Each power semiconductor of power module 101 may further include switches such as the four power semiconductors dies S₆₁ - S₆₄ in parallel as shown in detailed view 230. The four power semiconductors dies S61 - S64 may be connected in parallel. GS₆₁ - GS₆₄ controls the gate signal. When gates GS₆₁ - GS₆₄ are closed, it means all switches S₆₁ - S₆₄ are switching on and off. If gate GS₆₁ is open and the remaining gates are closed, this means switch S₆₁ will not switch on and off. Only switches S₆₂ - S₆₄ switch on and off in parallel.

It will be appreciated by a person of skill in the art that other power module topologies may have more power semiconductors or switches. For example, three voltage level topologies including neutral point clamped inverters such as advanced neutral point clamped (ANCP) inverter, improved neutral point clamped (INCP) inverter, and T-type neutral point clamped (TNCP) inverter. Other power module topologies utilizing power semiconductors may be monitored to control the traction inverter.

Power Semiconductor monitor 250 is configured to measure one or more parameters of the one or more power semiconductors, such as power semiconductor 104 of FIG. 1. The control architecture may define its own categories of power semiconductor parameters to measure and track over time. A customized power semiconductor monitor 250 design may include hardware and software designed to monitor critical parameters of power semiconductors. For example, power semiconductor monitor 250 may be configured to monitor two main classifications of power semiconductor parameters. The first classification may be labeled real-time parameters of the power semiconductors and include on state voltage (VDS_{ON}) and junction temperature (T_{J}). The second classification may be labeled long-term parameters of the power semiconductors and include a threshold voltage (V_{TH}), on state resistance (RDS_{ON}), and thermal resistance (R_{TH}).

Each classification may be defined by their relationship with the current flowing through the power semiconductor. For example, real-time parameters may change with a change in the current flowing through the power semiconductor in real time. In contrast, long-term parameters may remain unchanged with changes in the current flowing through the power semiconductors. Instead, long-term parameters may change over the life of the power semiconductor.

Control architecture 202 may include several components configured to analyze and process the data measured by power semiconductor monitor 250. Control architecture 202 may include data analysis module 204 which is configured to receive the measured data from power semiconductor monitor 250. Data analysis module 204 may include a processor and a memory to process the data communicated from power semiconductor monitor 250. The memory of data analysis module 204 may store artificial intelligence (AI) algorithms configured to take the measured power semiconductor parameters as input. The processor of data analysis module 204 may execute the AI algorithm to process the measured power semiconductor parameters.

Power semiconductor monitor 250 will send its measured power semiconductor data to data analysis module 204 where the processor processes the measured power semiconductor data to determine and/or predict trends of the power semiconductors. Different AI or machine learning (ML) algorithms may be capable analyzing the power semiconductor data. For example, Stochastic Gradient Descent (SGD); Perceptron Algorithm; Online Passive-Aggressive (PA) Algorithm; Incremental k-Means; Incremental Principal Component Analysis (PCA); Cumulative Sum Control Chart (CUSUM); Exponentially Weighted Moving Average (EWMA); Recurrent Neural Networks (RNNs); Streaming Convolutional Neural Networks (CNNs); AutoRegressive Integrated Moving Average (ARIMA); Exponential Smoothing (ETS) algorithms may process the measured power semiconductor parameters.

Any other AI or ML algorithm capable of determining the trends of power semiconductor based on measured data of the power semiconductor may be implemented in data analysis module 204. The requirements of the AI or ML algorithm are that it must be capable of analyzing the data in real time. Said differently, that the algorithm must be optimized for low latency to ensure that the results are provided in real time to ensure desirable performance of the power management system.

The algorithm should also be scalable, adaptable, and efficient. In addition to the ability to process data in real time, the algorithm should have the ability to manage large volumes of data in real time. The algorithm should be able to adapt to changes in the data distribution without requiring further training. The algorithm should be able to process the large amounts of data while minimizing the resource requirements.

Any one of the previously mentioned machine learning algorithms may be trained to monitor power semiconductors of an electric vehicle. For example, using a deep reinforcement learning algorithem or an adaptive filtering algorithm to monitor a test electric vehicle. The electrice test vehicle may be driven under customized test conditions. The customized test conditions may include extreme driving conditions. In this way the traction inverter can be controlled for extreme driving conditions without having to over design the power module of the traction inverter. For example, very aggressive driving behavior with quick accelarations, high speed turns, etc. The AI algorithm will be trained to handle a wide variety of driving behaviors to handle these driving behaviors, including extreme driving behaviors, in real world scenarios.

The data analysis module 204 includes an algorithm, such as those described above, which uses the power semiconductor parameter data from power semiconductor monitor 250 to generate predictions and determinations of driving behavior. The output of data analysis module 204 may include trends or predictions based on the power semiconductor data. For example, data analysis module 204 may generate two main groups of power semiconductor data such as real-time data and long-term data, different data types will be generated.

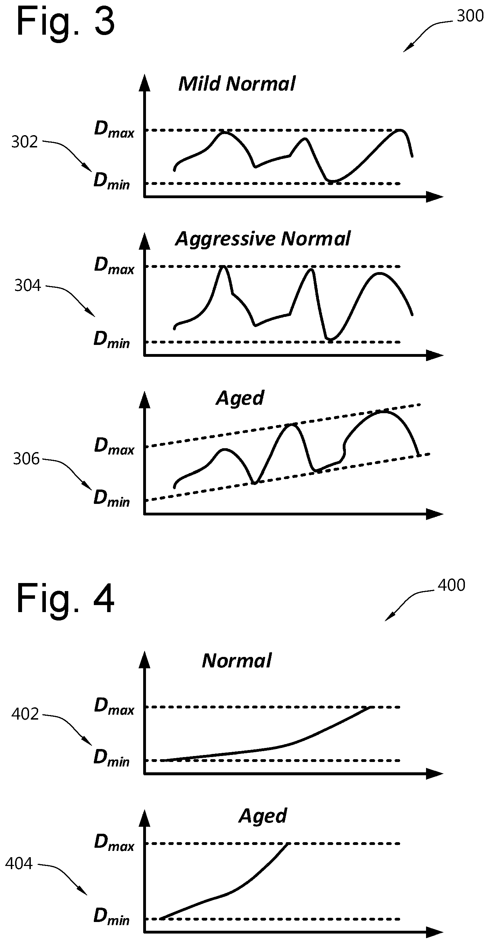

Both real-time and long-term data types may be divided into subclassifications. For example, real-time data types may include three subclassifications and long-term data types may include two subclassifications which will be further described with respect to FIG. 3 and FIG. 4, respectively. A person of skill in the art will understand that the data types illustrated in FIG. 3 and FIG. 4 are exemplary and that other data types may be configured.

Data analysis module 204 may communicate the data types to driver analysis behavior module 206. Driver behavior module 206 may include a processor and a memory. The memory of driver analysis module 206 may store instructions for analyzing the output of data analysis module 204 to generate control instructions for the power management system of an electric vehicle based on the predictions of the AI or ML algorithm. The processor of driver analysis module 206 may execute the instructions stored in the memory to generate the control instructions. A person of skill in the art will understand that data analysis module 204 and driver behavior analysis module 206 may be combined, separate or share a processor and memory.

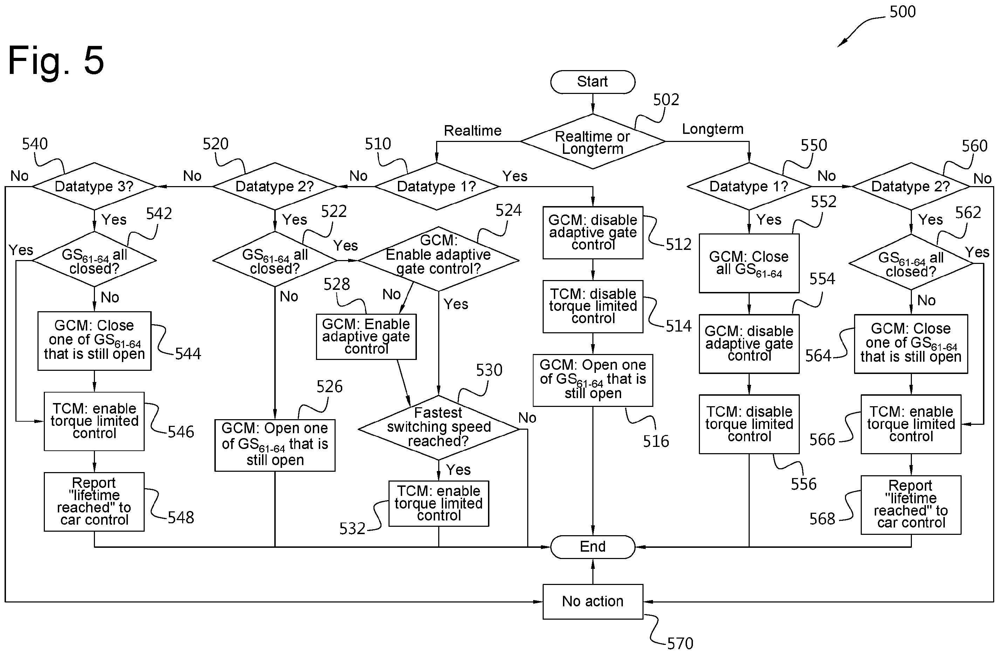

Driver behavior analysis module 206 may generate instructions for controlling the power management system of the electric vehicle. For example, driver behavior analysis module 206 may generate control instructions based on a control mode selection algorithm. The method of selecting the control mode based on the output of data analysis module 204 is further described with respect to FIG. 5. The control instructions may include instructions to control the gates of the power semiconductors of power module 101 and to control the amount of torque generated by torque control 212.

Each of the switches S₁-S₆ of the power semiconductors shares the same gate drive design as shown in Fig. 2. Hereby, it is assumed that four power semiconductors dies S₆₁₋₆₄ work in parallel for each power semiconductor of the power module. GS₆₁₋₆₄ controls the gate signal for the four power semiconductors dies S₆₁₋₆₄. When GS₆₁₋₆₄ are closed, it means all of S₆₁₋₆₄ are switching on and off. If GS₆₁ is open and the remaining GS₆₂₋₆₄ are closed, this means S₆₁ will not switch on and off. Only S₆₂₋₆₄ switch on and off in parallel.

Driver behavior analysis module 206 may generate a gate control mode (GCM) instruction to power module 101. GCM instructions may control a power semiconductor gate for the power semiconductors of power module 101. For example, the instructions may switch the gate driving scheme between a normal switching mode when GCM is disabled and an adaptive switching mode when GCM is enabled based on a measured voltage of the power semiconductors. The Adaptive switching mode can help to control switching transients including dv/dt (the derivative of the voltage with respect to time), di/dt (is the derivative of the current with respect to time), switching voltage peaks, and switching current peaks so as to control the switching loss of power semiconductor. Higher dv/dt and di/dt means a faster switching speed, which means a smaller switching loss if switching voltage peaks and switching current peaks is low. A lower switching loss contributes to a better reliability performance of power semiconductors.

Driver behavior analysis module 206 may generate a torque control mode (TCM) instruction to torque control 212. TCM instructions may control the torque required by the electrical vehicle. If the required torque is too high or the healthy status of the power semiconductor is not good, TCM instruction may reduce the torque output when TCM is enabled. For example, the TCM instruction may impose a limit on the torque output based on a determination of aggressive diving behavior or reduce the torque output for aged power semiconductors. This ensures the safety of driving the electric vehicle. The TCM instruction may be applied to current control system 216 to limit the current.

For example, torque control 212 may receive an input signal based on the electric machine torque 207 and a torque reference 210. Torque meter 208 may directly measure the electric machine torque 207 and generate a signal including the measured machine torque. Alternatively, a torque calculator may estimate the machine torque based on power, speed, and or current. A signal including torque reference 210 and a measurement of electric machine torque 207 may be multiplied and used as further input for torque control 212. Torque control 212 may generate torque control signal based on the TCM instruction, the electric machine torque measurement, and the torque reference. The torque control signal may be multiplied with the current signal 214, where current signal 214 represents the direct current power module 101 provides to electric machine 240, to generate a current control signal. Current control 216 takes the current control signal as input and generates outputs to modulator 218. Modulator 218 generates a signal representing the current control signal and communicates it to the power semiconductors of power module 101.

The power semiconductors of power module 101 may adaptively control switches S₁ - S₆ and gates of the power semiconductors based on the GCM instruction and current control signal to adjust the current generated for electric machine 240.

Other signals may be generated by power management system 200. For example, Power management system 200 may further control distribution of cooling fluid to maintain a junction temperature of the power semiconductors.

The data analysis module 204 may be customized to classify the measured power semiconductor parameters into any number of classifications and subclassifications. For example, FIG. 3 illustrates a first classification, real-time data, and its three subclassifications. The charts in FIG. 3 may represent any of the measure power semiconductor parameters.

The three subclassifications may be divided into three data types. The first real-time data type 302, datatype 1, is labeled as mild normal. First real-time data type 302 may represent mild driving in an electric vehicle which has a healthy power module. Mild driving may be driving behaviors which are close to center of the range of what the electric machine can manage. As shown in FIG. 3, first data type 302 includes power semiconductor data which is changing between Dmax and Dmin with slow changing slope. Dmax-Dmin is within a relatively small range as compared to other data types and Dmax is within the maximum allowed limit.

The second real-time data type 304, datatype 2, is labeled as aggressive normal. Second real-time data type 304 may represent aggressive driving in an electric vehicle which has a healthy power module. Aggressive driving may be driving behaviors which are close to extreme of the range of what the electric machine can manage. As shown in FIG. 3, second data type 304 includes power semiconductor data which is changing between Dmax and Dmin with fast changing slope. Dmax-Dmin is within a relatively big range as compared to other data types and Dmax may be at the maximum allowed limit.

The third real-time data type 306, datatype 3, is labeled as aged. Third real-time data type 306 may represent driving behaviors in an aged electric vehicle. As shown in FIG. 3, third data type 306 includes power semiconductor data which is changing between Dmax and Dmin. However, Dmax and Dmin are increasing in a relatively fast slope as compared to other data types.

FIG. 4 illustrates a second classification, long-term data, and its two subclassifications. The charts in FIG. 4 may represent any of the measure power semiconductor parameters.

The first long-term type 402, datatype 1, is labeled as normal. First long-term data type 402 may represent a healthy power module.

The second long-term type 404, datatype 2, is labeled as aged. Second long-term data type 404 may represent an aged power module which may be susceptible to failure.

Fig. 5 shows driver a behavior analysis method 500 which may be executed by driver behavior analysis module 206. Method 500 may have first step 502 which divides the measured power semiconductor data into classifications. In this example, the data is determined to be real-time data or long-term data. If step 502 determines that the measured power semiconductor data is real-time data, method 500 moves to step 510. At step 510, method 500 determines whether the driving behavior is mild normal, for example data type 302. If step 510 determines that the driving behaviors are mild normal, method 500 disables gate control mode at step 512, and disables torque control mode at step 514, and ensures that at least one gate of each of the power semiconductors of power module 101 remains open at step 516 and ends the method. Step 516 may ensure that the status of gates GS₆₁ - GS₆₄ of detailed view 230 remains the same. Said differently, it maintains the status of the gates (open or closed) and the power module operates without change. By choosing to maintain the status of the gates, the method avoids unnecessarily controlling a gate such as to close an open gate or open a closed gate. Said differently, because method 500 determines that driving is not extreme it does not have to limit the current or adaptively switch power semiconductor gates of the power semiconductors. If step 510 determines that the driving behavior is not mild normal, it proceeds to step 520.

At step 520, method 500 determines whether the driving behavior is aggressive normal, for example data type 304. If step 520 determines that the driving behaviors are aggressive normal, method 500 determines whether each all gates for each of the power semiconductors are closed at step 522. If the all the gates are closed, method 500 moves to determine whether gate control mode is enabled at step 524. If step 522 determines that not all gates are closed method 500 moves to step 526 and ensures that at least one gate of each of the power semiconductors of power module 101 remains open and ends the method. For example, step 526 does not change anything. If step 524 determines that gate control mode is not enabled, method 500 moves to step 528 to enable gate control mode and moves to step 530. If step 524 determines that gate control mode is enabled, method 500 moves to step 530. Step 530 determines whether the fastest switching speed has been reach. If step 530 determines that the fastest switching speed has not been reached, method 500 ends. If step 530 determines that the fastest switching speed has been reached, method 500 moves to step 532 and enables torque control mode and ends method 500. Said differently, when method 500 identifies aggressive driving conditions, method 500 tries to eliminate stress and damage to the power module, by trying to, adaptively open and close the gates based on the power semiconductor parameters as fast as possible, and/or limiting the amount of the torque on the electric machine by controlling the current provided to the electric machine. If step 520 determines that the driving behavior is not aggressive normal, it proceeds to step 540.

At step 540, method 500 determines whether the driving behavior is aged, for example data type 306. If step 540 determines that the driving behaviors are aged, method 500 moves to step 542. Step 542 determines if all gates are closed. If step 542 determines that all gates are closed, method 500 moves to step 546. If step 542 determines that all gates are not closed, method 500 moves to step 544. Step 544 ensures that at least one gate of each of the power semiconductors of power module 101 remains open and moves to step 546. For example, step 544 does not change anything. Step 546 enables torque control mode and moves to step 548. Step 548 generates an alert message indicating that the power semiconductor has failed or is near failure and ends method 500. Said differently, method 500 has determined that the power module is at or near failure and limit the torque on the electric machine by limiting the current generated by the power module. If step 540 determines that the driving behavior is not aged, it proceeds to step 570 and takes not action and ends method 500.

If step 502 determines that the measured power semiconductor data is long-term data, method 500 moves to step 550. At step 550, method 500 determines whether the driving behavior is normal, for example data type 402. If step 550 determines that the driving behaviors are normal, method 500 moves to step 552 and closes all gates of the power semiconductor and moves to step 554. Step 554 disables gate control mode and moves to step 556. Step 556 disables torque control mode and ends method 500. Said differently, because method 500 determines that power module is responding normally it does not have to limit the current or adaptively switch power semiconductor gates. If step 550 determines that the driving behavior is not normal, it proceeds to step 560.

At step 560, method 500 determines whether the driving behavior is aged, for example data type 404. If step 560 determines that the driving behaviors are for an aged power module, method 500 moves to step 562 to determine if all the gates of the power semiconductor are closed. If step 562 determines that all the gates of the power semiconductor are closed, method 500 moves to step 566. If step 562 determines that all the gates of the power semiconductor are not closed, method 500 moves to step 564 and ensures that at least one gate of each of the power semiconductors of power module 101 remains open and ends the method and moves to step 566. For example, step 564 does not change anything. Step 566 enables torque control mode and moves to step 568. Step 568 generates an alert message indicating that the power semiconductor has failed or is near failure and ends method 500. Said differently, method 500 has determined that the power module is at or near failure and tries to limit the torque on the electric machine by limiting the current generated by the power module or adaptive control the gates of the power semiconductor. If step 560 determines that the driving behavior is not aged, it proceeds to step 570 and takes not action and ends method 500.

A person of skill in the art will understand that the steps illustrated in FIG. 5 may be combined or that method 500 may include other steps.

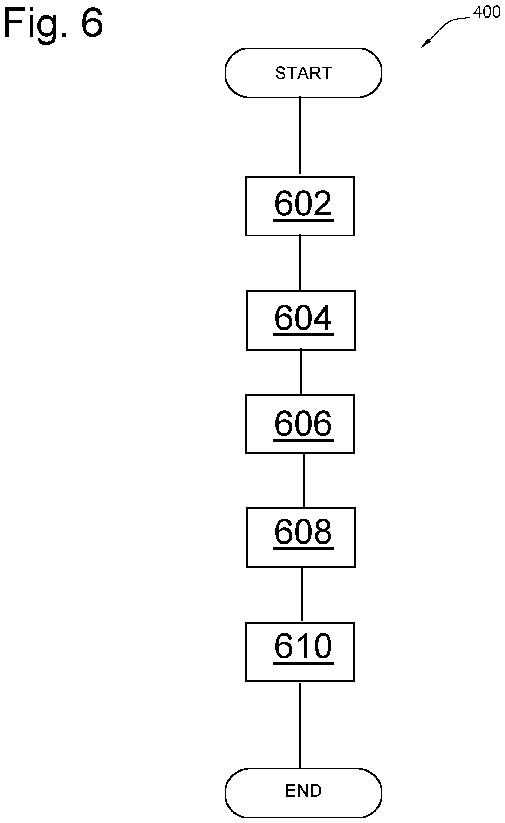

Fig. 6 illustrates exemplary method 600 of controlling a traction inverter. As shown in FIG. 6, method 600 includes receiving a torque estimation from a torque meter connected to the traction inverter at step 602; receiving a parameter data of a power semiconductor of the traction inverter semiconductor monitor at step 604; determining a health prediction of the power semiconductor based on the parameter data at step 606; determining an operating mode of the traction inverter based on the torque estimation, a parameter data of a power semiconductor and the health prediction of a power semiconductor at step 608; and generating a control instruction based on the operating mode, wherein the control instruction includes a first gate control of a gate of the traction inverter, a second gate control of a plurality of gates of the power semiconductor, or a current control of a current to the power semiconductor at step 610.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiments disclosed, but that the present disclosure will include all embodiments falling within the scope of the appended claims.

## Claims

1. A method of controlling a traction inverter of an electric machine comprising:
receiving a torque estimation from a torque meter connected to the traction inverter;
receiving a parameter data of a power semiconductor of the traction inverter semiconductor monitor;
determining a health prediction of the power semiconductor based on the parameter data;
determining an operating mode of the traction inverter based on the torque estimation, a parameter data of a power semiconductor and the health prediction of a power semiconductor; and
generating a control instruction based on the operating mode, wherein the control instruction includes a first gate control of a gate of the traction inverter, a second gate control of a plurality of gates of the power semiconductor, or a current control of a current to the power semiconductor.

2. The method of claim 1, wherein the parameter data includes a real-time data.

3. The method of claim 1 or 2, wherein the parameter data includes a long-term data.

4. The method of claim 2, wherein the real-time data includes an on-state voltage of the power semiconductor;

5. The method of claim 2 or 4, wherein the real-time data includes a junction temperature of the power semiconductor.

6. The method of claim 3, wherein the long-term data includes a threshold voltage of the power semiconductor.

7. The method of claim 3 or 6, wherein the long-term data includes an on-state resistance of the power semiconductor.

8. The method of claim 3, 6, or 7, wherein the long-term data includes a thermal resistance of the power semiconductor.

9. The method of any one of the preceding claims, wherein determining the operating mode includes determining if the parameter data is the real time data or the long term data.

10. The method of claim 9, further comprising determining a rate of change of the real time data.

11. The method of claim 9 or 10, further comprising determining a rate of change of the long term data.

12. The method of claim 10, wherein the operating mode is further based on the rate of change of the real-time data.

13. The method of claim 11 or 12, wherein the operating mode is further based on the rate of change of the long-term data.
